## Europäisches Patentamt
## European Patent Office
## Office européen des brevets

(19)

(11) Publication number: **0 010 395**
**B1**

(12) **EUROPEAN PATENT SPECIFICATION**

(45) Date of publication of patent specification: **07.07.82**

(51) Int. Cl.³: **B 01 D 21/24, C 02 F 1/52**

(21) Application number: **79302155.1**

(22) Date of filing: **09.10.79**

(54) Settling tank.

(30) Priority: **10.10.78 US 949485**

(43) Date of publication of application:
**30.04.80 Bulletin 80/9**

(45) Publication of the grant of the patent:
**07.07.82 Bulletin 82/27**

(84) Designated Contracting States:
**AT BE CH DE FR GB IT NL SE**

(56) References cited:
**BE - A - 554 111**
**CH - A - 553 587**
**CH - A - 563 794**
**DE - A - 1 642 794**
**DE - B - 1 225 608**
**DE - C - 1 020 605**
**US - A - 2 528 094**
**US - A - 3 006 474**
**US - A - 3 532 218**
**US - A - 3 542 207**
**US - A - 4 038 186**
**US - A - 4 054 514**

(73) Proprietor: **DORR-OLIVER INCORPORATED**
**77, Havemeyer Lane**
**Stamford Connecticut 06904 (US)**

(72) Inventor: **Fitch, Elliot Bryant**
**263 Oak Street**
**Auburn, Alabama 36830 (US)**

(74) Representative: **Lawson, David Glynne et al,**
**MARKS & CLERK 57-60 Lincoln's Inn Fields**
**London WC2A 3LS (GB)**

Courier Press, Leamington Spa, England.

## Settling tank

The present invention is directed to sedimentation apparatus and more particularly to apparatus for clarification of liquids by separation of a solids from a liquid solids suspension wherein flocculants are added to the suspension for increasing the rate of separation and providing a dense underflow.

In certain sedimentation apparatus which comprise cylindrical settling tanks which utilize central feed-wells for receiving a solids contained liquid suspension for settling the solids within the tank, it is well known to utilize the addition of flocculating chemicals to the influent either in the feedwell or at a point prior thereto to promote the agglomeration of solids and rapid settling thereof within the tank. The settled solids form a dense underflow and are removed from the bottom of the tank by means of rotating rake means which direct the settled mass to a central discharge sump in the tank. Simultaneously the clarified liquid overflows the top of the tank into a peripheral launder. Various means are utilized for introducing the settling solids from the feedwell either directly into the dense underflow bed or into a settling zone above the bed and for controlling the amount of flocculant dosage in accordance with a selected desired rate of settling.

In flocculation treatment in equipment of the aforementioned type where the treatment of the influent is effected within the confines of the feedwell it is important that the flocculant be added to the influent in such a manner so as to obtain maximum distribution of the flocculant throughout the feedwell to form flocs in a rapid manner for settlement in the feedwell without further disturbing effects. It is therefore essential that a rapid and efficient mixing of flocculant with the influent feed be effected.

In the past various means have been employed for accomplishing these desired results by locating a flocculant feed means within a feedwell. For example in the apparatus disclosed in US—A—3,532,218 a sparger ring is located about the upper periphery of a deep feedwell and which sparger is provided with orifices for introducing a flocculant into the feedwell for mixture with the influent feed. In US—A—4,054,514 an auxiliary mixing tank is located within the main feedwell and is provided with an agitating device for mixing and dispersing flocculant treated feed suspension as an overflow from the auxiliary tank into a main feedwell. On the other hand US—A—2,528,094 discloses an arrangement wherein a flocculant is introduced into a tank to mix with the influent with a series of baffles provided to mix the flocculant with the influent feed.

The aforementioned prior art devices have met with varying success and do not exhaust the various prior art means for mixing flocculant either in or exterior to a feedwell but illustrate generally the prior art attempts to provide such means. Various problems are encountered in known devices in effectively and efficiently accomplishing the rapid settlement of solids. In one known type feedwell structures as disclosed in US—A—3,006,474 a feedwell is disclosed which comprises a feed distributor unit comprising circular channels or raceways juxtaposed one upon the other within a cylindrical feedwell. The main influent feed stream is split into two separate streams which are fed into the channels tangentially with one stream rotating counterclockwise and the other clockwise. The streams are displaced inwardly in opposite directions from the channels and are compelled to shear in a plane along the entire length of the channel at twice the velocity of either stream. The kinetic energy of the stream is thereby converted to a random turbulence of small eddies resulting in the elimination of any residual tangential velocity components to effectively dissipate the energy of the influent feed. This type feedwell has met with widespread acceptance and in view of the lack of moving parts is an economical and effective device.

A disadvantage of the known feedwell is that if a flocculant is added to the feedwell or to the in-flowing suspension before it reaches the feedwell, the flocculant additive has to pass through the zone of shear. This leads to degradation of the flocs before the suspension enters the settling phase, due to the turbulent in the shear zone and the abrupt transition when a small diluted volume of flocculant mixes with the high-velocity high-volume flow of the suspension.

It is an object of the present invention to provide a sedimentation device wherein novel means are included for introducing and mixing flocculant chemicals with an influent solids containing feed stream whereby the latter are mixed rapidly and thoroughly without floc degradation.

Another object is to provide for a novel flocculant distributor means for promoting a rapid agglomeration of settling solids within a feedwell resulting in dense underflow and a clarified overflow.

According to the present invention a settling tank comprises feed supply means for delivering an influent feed suspension to the tank, overflow means for clarified liquor separated from the influent feed, a settled solids collecting zone "A" at the bottom of the tank provided with settled solids discharge means, a movable rake structure for moving settled solids to said discharge means, and a feedwell for receiving the influent feed suspension, said feedwell comprising:

(a) a vertical hollow column arranged at the centre of the tank and open at the bottom thereof to said settled solids collecting zone "A".

(b) a cylindrical feed inlet located adjacent the top of said column spaced from said settled solids collecting zone "A" and including upper and lower cylindrical channels located about the periphery of said column and open to the longitudinal axis of said column.

(c) influent feed inlet means for introducing the influent feed to said feedwell and including a feed pipe having branch feed pipes for splitting and tangentially directing like feed streams into said upper and lower channels of said feedwell for rotation in respective clockwise and counterclockwise paths for discharge and remerging inwardly in a transverse zone of shear "B" within an area of said feedwell surrounded and peripherally defined by said upper and lower channels, whereat the energy of the feed streams is converted into random turbulence and the energy of the influent feed is dissipated, and

(d) means for dispersing flocculant, characterised by a flocculant dispersing means provided in said feedwell, comprising a third cylindrical channel about the periphery of said column and having a flocculant supply inlet and arranged at a location interposed between said upper and lower channels which are vertically spaced, a feed inlet to said third channel for dispersing a preselected dosage of diluted flocculant to said channel for discharge therefrom directly into said zone of shear "B" for mixing with said remerged feed streams prior to discharge of the influent suspension and added flocculant from said feedwell.

In the feedwell according to the present invention, the in-flowing liquid suspension is used to form a zone of shear, and the flocculant additive is fed directly into this zone of shear where the kinetic energy of the suspension has already been dissipated by the interaction between the oppositely rotating feed streams. The flocculant additive does not contribute to, nor is it subjected to, the shearing action.

The invention is applicable to various kinds of settling or sedimentation tanks, for example clarifier or thickener tanks. Preferably the tank is of generally cylindrical construction.

The above and other objects of the present invention will appear more fully hereinafter from a consideration of the detailed description which follows taken together with the accompanying drawings wherein one embodiment is illustrated.

Fig. 1 is a sectional elevational view of a sedimentation tank embodying the novel flocculation feedwell structure;

Fig. 2 is an enlarged elevational view of the feedwell removed from the tank; and

Fig. 3 is a sectional view taken on the line 3—3 of Fig. 2 with parts of the feedwell broken away to show the interior structure thereof.

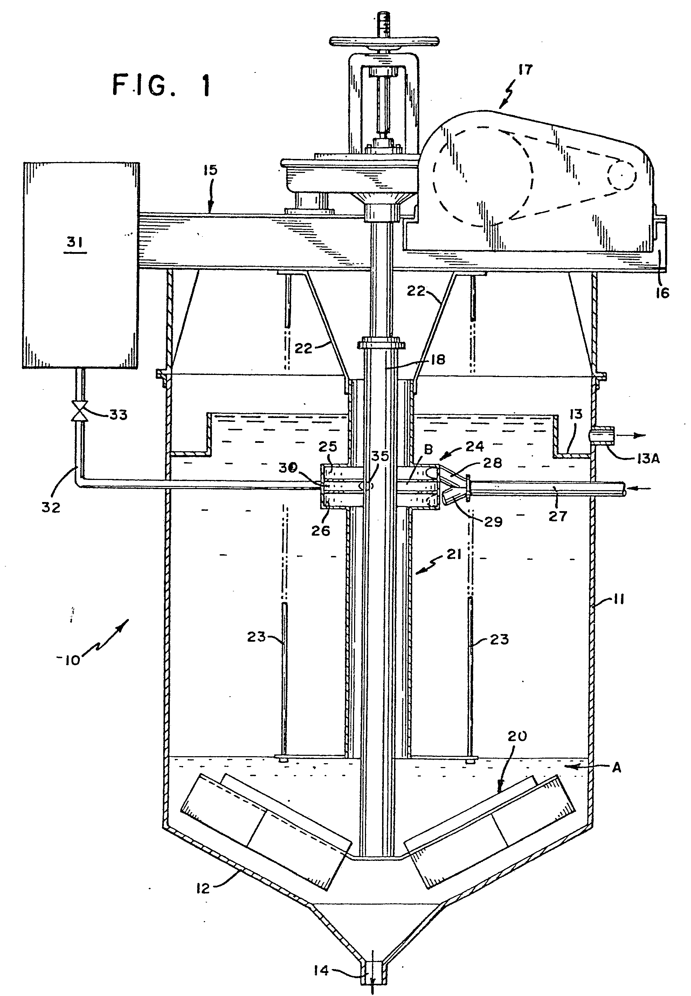

Referring now to the drawings for a more detailed description of the present invention a sedimentation tank incorporating an embodiment thereof is schematically illustrated and generally indicated by the reference numeral 10 in Fig. 1. Tank 10 comprises a cylindrical outer wall 11, a conical bottom wall 12 and an overflow peripheral launder 13 and outlet 13A, as well as a central sludge discharge sump outlet 14. An overhead supporting structure 15 is mounted on a tank wall 11 and includes a beam 16 which supports a motor drive mechanism 17 for driving a central rotatable drive shaft 18 to which is mounted a rotary rake structure 20 for moving settled underflow to sump 14 in a known manner.

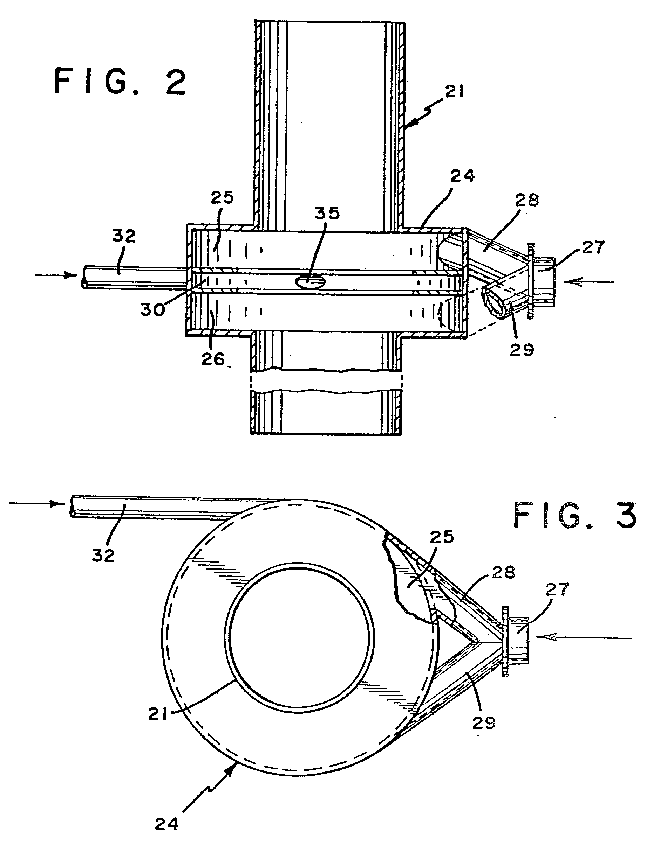

A central feedwell structure 21 depends from supporting beam 16 by means of flanged members 22 and tie rods 23 connected to beam 16. Feedwell 21 comprises an elongated hollow cylindrical column about drive shaft 18. Feedwell 21 is open to the lower region of tank 10 for discharging solids into or above the sludge or settled solids bed A. A submerged influent feed arrangement 24 is provided within feedwell 21 and comprises upper and lower circular feed channels 25 and 26 which are open to the longitudinal axis of feedwell 21 and are adapted to receive an influent feed from a feed conduit 27. Feed conduit 27 splits into upper and lower branches 28 and 29 leading tangentially into upper and lower feed channels 25 and 26. In this manner the liquid influent is caused to flow inwardly in opposite directions from channels 25 and 26 to shear in a plane along the entire length of the channels at twice the velocity of either shear in a shear zone designated "B" (Fig. 2) in accordance with the teaching of the aforementioned patent U.S. Patent No. 3,006,474 to Fitch entitled "Method and Means for Converting the Kinetic Energy of a Fluid Stream into Random Turbulence". In the shear zone B the energy of the two streams is converted into random turbulence and the energy of the influent stream dissipated.

As mentioned it is a feature of this invention to provide novel means for distributing and mixing flocculant with the influent feed for rapid settling of solids within the feedwell column 21. To this end an intermediate channel or tray 30 is provided in feedwell section 24 for receiving the flocculants from a flocculant mixing tank 31. Flocculant mixing tank 31 is mounted on overhead structure 15 and includes a feed pipe 32 and control valve 33. Pipe 32 extends into tank 10 and has an opening 35 in raceway 30 for tangentially introducing flocculant to the merging streams of the split influent feed in the shear zone B from channels 25 and 26 to effect a rapid settling of flocs in zone B and agglomeration of solids to form dense underflow.

In a comparison test of a feedwell of the type disclosed, flocculant was added to an influent feed of uranium acid leach suspension prior to the feedwell and externally of the tank at a dosage rate of 0.0022 Kg/t resulting in a thickener operating at a unit area capacity of 0.0366 m³/t/d. On the other hand, the addition of the polyelectrolyte flocculant at a rate of 0.013 Kg/t at a point adjacent the bottom channel of the feedwell within the feedwell produced a unit area capacity of 0.023 m³/t/d. The latter results being comparable to feeding the flocculant to an intermediate channel such as channel 30 at a flocculant dosage rate of 0.016 Kg/t. In effect the utilization of the disclosed feedwell results in an estimated 1.6 times greater tank capacity than where the flocculant is added prior to the feedwell.

It will be apparent from the foregoing description that the present invention has many advantages in use. In addition to the rapid and thorough mixing of flocculants with an influent feed, a sedimentation tank of greater capacity is achieved resulting in a more economical and efficient apparatus.

## Claims

1. A settling tank (10) which comprises in combination, feed supply means (27) for delivering an influent feed suspension to the tank, overflow means (13) for clarified liquor separated from the influent feed, a settled solids collecting zone "A" at the bottom of the tank provided with settled solids discharge means, a movable rake structure (20) for moving settled solids to said discharge means, and a feedwell (21) for receiving the influent feed suspension, said feedwell comprising:

(a) a vertical hollow column arranged at the centre of the tank and open at the bottom thereof to said settled solids collecting zone "A".

(b) a cylindrical feed inlet (24) located adjacent the top of said column spaced from said settled solids collecting zone "A" and including upper and lower cylindrical channels (25—26) located about the periphery of said column and open to the longitudinal axis of said column.

(c) influent feed inlet means for introducing the influent feed to said feedwell and including a feed pipe (27) having branch feed pipes (28—29) for splitting and tangentially directing like feed streams into said upper and lower channels of said feedwell for rotation in respective clockwise and counterclockwise paths for discharge and remerging inwardly in a transverse zone of shear "B" within an area of said feedwell surrounded and peripherally defined by said upper and lower channels, whereat the energy of the feed streams is converted into random turbulence and the energy of the influent feed is dissipated, and

(d) means for dispersing flocculant, characterised by a flocculant dispersing means provided in said feedwell, comprising a third cylindrical channel (30) about the periphery of said column and having a flocculant supply inlet (35) and arranged at a location interposed between said upper and lower channels (25, 26) which are vertically spaced, a feed inlet (32) to said third channel (30) for dispersing a preselected dosage of diluted flocculant to said channel (30) for discharge therefrom directly into said zone of shear "B" for mixing with said remerged feed streams prior to discharge of the influent suspension and added flocculant from said feedwell.

2. The settling tank according to claim 1, characterised in that the elongated vertical cylindrical column of the feedwell has a lower discharge opening in the lower region of said tank (10) to discharge settling solids into the bed "A", and the said channels (25—26—30) are arranged near the upper end portion of said column.

3. The settling tank according to claim 2 characterised in that the said discharge opening of the vertical column extends into the bed "A" of settled solids.

4. The settling tank according to claim 1, 2 or 3 characterised in that the channels (25, 26, 30) comprise flanged tray members secured to the inner walls of the cylindrical column.

## Patentansprüche

1. Absetzbehälter (10), welcher in Kombination aufweist: Zuführungseinrichtungen (27) für die Zufuhr von Zufluß-Suspension zu dem Behälter, Überfließeinrichtungen (13) für von der zugeführten Flüssigkeit abgetrennte, geklärte, Flüssigkeit, eine Sammelzone "A" für abgesetzte feste Bestandteile am Boden des Behälters, welche mit Entleerungseinrichtungen für abgesetzte feste Bestandteile versehen ist, eine bewegliche Recheneinrichtung (20) zur Bewegung der abgesetzten festen Bestandteile zu den besagten Entleerungseinrichtungen, sowie einen Zuführkanal (21) zur Aufnahme der zugeführten Zufluß-Suspension, wobei der Zuführkanal folgende Bestandteile aufweist:

(a) eine in der Mitte des Behälters vertikal angeordnete, am Boden desselben zu besagter Sammelzone "A" für feste Bestandteile hin offene Hohlsäule;

(b) einen zylindrischen Zuführungseinlaß (24), welcher in Nähe des oberen Endes besagter Säule und mit Abstand zu besagter Sammelzone "A" für abgesetzte feste Bestandteile angeordnet ist und obere und untere zylindrische Kanäle (25, 26) aufweist, die sich um den Umfang besagter Hohlsäule erstreckend angeordnet und zur Längsachse besagter Hohlsäule hin offen sind;

(c) Zufluß-Einlaßeinrichtungen für die Zufuhr von einfließender Zufluß-Suspension zu besagtem Zuführkanal, mit einem Zuführrohr (27) mit Verzweigungszuführleitungen (28, 29) zum Aufspalten und zur tangentiale Richtungsgebung gleicher Zufuhrströmungen in besagte obere und untere Kanäle des besagten Zuführkanals hinein, derart, daß Drehungen in im Uhrzeigersinn und entgegen dem Uhrzeigersinn gerichteten Strömungsbahnen erzeugt werden, die nach innen in eine transversal verlaufende Scherzone "B" strömen, welche in einem Bereich des Zuführkanals angeordnet ist, der von besagten oberen und unteren Kanälen umgeben und peripher begrenzt ist, wobei die in den Strömungsbahnen enthaltene Energie in regellose Turbulenzen umgewandelt und die Energie der Einflußströmung zerstreut wird, und

(d) Einrichtungen zur Verteilung eines Flockungsmittels, gekennzeichnet durch in besagtem Zuführkanal vorgesehene Flockungsmittel verteilungseinrichtungen, welche einen dritten zylindrischen Kanal (30) aufweisen, der sich um den Umfang besagter Hohlsäule erstreckt und einen Flockungsmittelzuführeinlaß (35) aufweist, und der an einer Stelle zwischen den besagten oberen und unteren, einen vertikalen Abstand voneinander aufweisenden Kanälen (25, 26) angeordnet ist, durch einen Zuführeinlaß (32) zu besagtem dritten Kanal (30) zwecks Verteilung einer vorausgewählten Dosis von verdünntem Flockungsmittel in besagtem Kanal (30) und zur direkten Entleerung in die besagte Scheerzone "B", derart, daß eine Mischung mit den besagten wiederausgeströmten Strömungsbahnen erfolgt, bevor die Zufluß-Suspension und das zugefügte Flockungsmittel aus besagtem Zuführkanal austritt.

2. Absetzbehälter nach Anspruch 1, dadurch gekennzeichnet, daß die längliche, vertikale zylindrische Hohlsäule des Zuführkanals im unteren Bereich des Behälters (10) eine untere Ausströmöffnung für das Ausströmen sich absetzender fester Bestandteile in das Bett "A" aufweist, und daß die besagten Kanäle (25, 26, 30) in der Nähe des oberen Endteiles besagter Hohlsäule angeordnet sind.

3. Absetzbehälter nach Anspruch 2, dadurch gekennzeichnet, daß die besagte Ausströmöffnung der vertikalen Hohlsäule sich in das Bett "A" für abgesetzte feste Bestandteile erstreckt.

4. Absetzbehälter nach Anspruch 1, 2 oder 3, dadurch gekennzeichnet, daß die Kanäle (25, 26, 30) an den Innenwänden der zylindrischen Hohlsäule befestigte flanschartige Schalenelemente aufweisen.

**Revendications**

1. Cuve de décantation (10) comprenant en combinaison des moyens d'alimentation (27) pour délivrer une suspension de solution affluente à la cuve, des moyens de débordement (13) pour le filtrat provenant de la solution affluente, une zone de recueil "A" des solides décantés au fond de la cuve équipée de moyens d'évacuation des particules solides de décantation, une structure de brassage mobile (20) pour déplacer les solides vers lesdits moyens d'évacuation et un puits d'alimentation (21) pour recevoir la suspension de solution affluente, ledit puits d'alimentation comprenant:

a) une colonne creuse verticale disposée au centre de la cuve et ouverte à sa partie inférieure sur ladite zone de recueil "A" des solides décantés;

b) un corps cylindrique d'amenée (24) adjacent à la partie supérieure de ladite colonne, à l'opposé de ladite zone de recueil "A" des solides décantés, et incluant des canaux cylindriques supérieur et inférieur (25—26) disposés à la périphérie de ladite colonne et ouverts vers l'axe longitudinal de ladite colonne;

c) des moyens d'alimentation de solution affluente pour introduire la solution affluente au puits d'alimentation incluant un conduit d'alimentation de solution (27) ayant des branches (28—29) pour séparer le courant d'alimentation des courants analogues et les diriger tangentiellement dans lesdits canaux supérieur et inférieur dudit puits d'alimentation de manière à faire tourner ces courants suivant des sens respectifs inverses l'un de l'autre et les faire déverser et réapparaître vers l'intérieur d'une zone transversale de cisaillement "B" à l'intérieur dudit puits entourée et délimitée à sa périphérie par lesdits canaux supérieur et inférieur, d'où il résulte que l'énergie cinétique des courants d'alimentation est transformée en turbulence aléatoire et l'énergie de la solution d'alimentation est dissipée; et

d) des moyens pour disperser du floculant, caractérisée par des moyens de dispersion de floculants disposés dans ledit puits d'alimentation, comprenant un troisième canal cylindrique (30) à la périphérie de ladite colonne et ayant une ouverture d'arrivée de floculant (35) et disposé entre lesdits canaux supérieur et inférieur (25, 26) qui sont espacés verticalement, une conduite d'alimentation (32) dudit troisième canal pour disperser un dosage prédéterminé de floculant dilué dans ledit canal (30) afin de déverser celui-ci directement dans ladite zone de cisaillement "B" et l'y mélanger auxdits courants d'alimentation réapparaissant avant déversement de la suspension affluente et du floculant additionné dans ledit puits d'alimentation.

2. Cuve de décantation selon la revendication 1, caractérisée en ce que la colonne verticale cylindrique longiligne du puits d'alimentation a un orifice inférieur d'évacuation dans la partie basse de ladite cuve (10) en vue d'évacuer les solides en cours de décantation dans la zone "A", et en ce que les trois canaux (25—26—30) sont disposés à proximité de l'extrémité supérieure de ladite colonne.

3. Cuve de décantation selon la revendication 2, caractérisée en ce que l'orifice d'évacuation de la colonne verticale plonge dans la zone "A" de solides décantés.

4. Cuve de décantation selon la revendication 1, 2 ou 3, caractérisée en ce que les canaux (25, 26, 30), comprennant des plateaux bridés montés sur les parois internes de la colonne cylindrique.

**0 010 395**

FIG. 1

1

FIG. 2

FIG. 3